# EUROPÄISCHE PATENTSCHRIFT

(11) **EP 3 290 167 B1**
(45) Veröffentlichungstag und Bekanntmachung des Hinweises auf die Patenterteilung: **20.10.2021**
(21) Anmeldenummer: 16186854.2
(22) Anmeldetag: 01.09.2016
(51) Int. Cl.: B25J 15/06, B25J 15/12, B25J 19/02

(54) **HANDHABUNGSVORRICHTUNG UND VERFAHREN ZUR ÜBERWACHUNG EINES HANDHABUNGSVORGANGS**
HANDLING DEVICE AND METHOD FOR MONITORING A HANDLING PROCEDURE
DISPOSITIF DE MANIPULATION ET PROCÉDÉ DE SURVEILLANCE D'UN PROCESSUS DE MANIPULATION

(43) Veröffentlichungstag der Anmeldung: 07.03.2018
(73) Patentinhaber: J. Schmalz GmbH, 72293 Glatten (DE)
(72) Erfinder: ALZOUBI, Feras, 72184 Eutingen im Gäu (DE); HUBER, Herman, 72213 Altensteig (DE); DEFRANCESKI, Aline, 72160 Horb a.N. (DE)
(74) Vertreter: DREISS Patentanwälte PartG mbB

(56) Entgegenhaltungen:
- WO-A1-2013/034634
- WO-A1-2016/029143
- JP-A- 2016 030 308
- US-A1- 2008 202 202
- None

## Beschreibung

Die Erfindung betrifft eine Handhabungsvorrichtung zum Halten von Gegenständen sowie ein Verfahren zur Überwachung eines Handhabungsvorgangs.

Handhabungsvorrichtungen werden insbesondere in Bearbeitungsprozessen für Gegenstände eingesetzt. Die Gegenstände werden mittels der Handhabungsvorrichtung gehalten und z.B. während der Bearbeitung fixiert. Die Handhabungsvorrichtung kann auch dazu dienen, den gehaltenen Gegenstand zu verlagern oder auszurichten. Insofern kann es sich bei den Handhabungsvorrichtungen im vorliegenden Sinn um Greifvorrichtungen oder Spannvorrichtungen handeln.

Im Betrieb der Handhabungsvorrichtung ist eine bedarfsgerechte und präzise Ansteuerung wichtig. Beispielsweise muss die auf den Gegenstand wirkende Haltekraft auf den durchgeführten Handhabungsvorgang und/oder auf den durchgeführten Bearbeitungsvorgang abgestimmt werden. Außerdem soll der Gegenstand meistens möglichst präzise positioniert werden.

Die Ansteuerung wird insbesondere in Abhängigkeit verschiedener Betriebskenngrößen der Handhabungsvorrichtung durchgeführt. Beispiele für relevante Betriebsgrößen sind: Anwesenheit oder Abwesenheit eines zu haltenden Gegenstandes an dem Anlageabschnitt der Handhabungsvorrichtung (Präsenzkontrolle), Position des Gegenstandes, ausgeübte Haltekraft, oder Kräfte/Beschleunigungenm, die auf den Gegenstand wirken. Von Interesse ist auch eine Detektion von Störeinflüssen wie Verrutschen oder Schwingen des gehaltenen Gegenstandes. Insbesondere soll eine zuverlässige und präzise Überwachung von Relativbewegungen zwischen dem fixierten Gegenstand und der Handhabungsvorrichtung ermöglicht werden, da solche Relativbewegungen zu Ungenauigkeiten im Handhabungsprozess führen, und in der Folge die Bearbeitungsprozesse am Gegenstand unpräzise durchgeführt werden.

Zur Ermittlung von Betriebskenngrößen ist es bekannt, jeweils entsprechende Sensoreinrichtungen an der Handhabungsvorrichtung anzuordnen. Beispielsweise zeigt die DE 10 2014 221 294 A1 eine Sensorvorrichtung mit wenigstens zwei Drucksensoren, mittels welcher die auf einen Anlageabschnitt einer Greifvorrichtung wirkende Kraftverteilung ermittelt werden kann.

Für eine umfängliche Überwachung kann es bei den bekannten Vorrichtungen erforderlich sein, mehrere verschiedenartige Sensoreinrichtungen vorzusehen. Dies führt zu einem erhöhten konstruktiven Aufwand und zu Fehleranfälligkeit.

WO 2013/034634 A1, WO 2016/029143 A1, JP 2016-030308 A und US 2008/202202 A1 offenbaren jeweils eine Handhabungsvorrichtung mit Merkmalen des Anspruchs 1.

Die Aufgabe der vorliegenden Erfindung besteht darin, den Betrieb von Handhabungsvorrichtungen auf konstruktiv einfache Weise und zuverlässig zu überwachen und insbesondere die Positionsgenauigkeit und Positionstreue von gehaltenen Gegenständen zu überwachen.

Diese Aufgabe wird durch eine Handhabungsvorrichtung zum Halten von Gegenständen gemäß Anspruch 1 sowie durch ein Verfahren zur Überwachung eines Handhabungsvorgangs mit einer Handhabungsvorrichtung gemäß Anspruch 15 gelöst. Die Handhabungsvorrichtung ist vorzugsweise als Greifvorrichtung oder Spannvorrichtung ausgebildet. Die Vorrichtung umfasst einen Basisabschnitt und einen Anlageabschnitt, wobei der Anlageabschnitt dazu ausgebildet ist, beim Halten des Gegenstandes an diesen anzuliegen. Der Anlageabschnitt stellt insbesondere eine Anlagefläche für den Gegenstand bereit. Der Basisabschnitt kann beispielsweise zum Befestigen der Handhabungsvorrichtung an einem Aktor oder einer Konsole dienen. Die Handhabungsvorrichtung umfasst außerdem eine Sensoreinrichtung, welche eine erste Sensorkomponente und eine zweite Sensorkomponente aufweist. Die Sensorkomponenten wirken zusammen, um eine Messung bzw. Ermittlung von Betriebskenngrößen der Handhabungsvorrichtung zu ermöglichen.

Die Sensoreinrichtung ist dazu eingerichtet, eine Veränderung der Position der ersten Sensorkomponente relativ zu der Position der zweiten Sensorkomponente zu ermitteln. Dabei ist die erste Sensorkomponente derart ausgestaltet und auch derart angeordnet, dass dann, wenn ein Gegenstand an dem Anlageabschnitt gehalten ist, eine Verlagerung dieses Gegenstandes relativ zu dem Basisabschnitt (ggf. unter Verformung des Anlageabschnitts) mit einer Verlagerung der ersten Sensorkomponente relativ zu dem Basisabschnitt verbunden ist. Die zweite Sensorkomponente ist in einer festen Position relativ zu dem Basisabschnitt angeordnet, so dass eine Verlagerung der ersten Sensorkomponente relativ zum Basisabschnitt mit einer Verlagerung der ersten Sensorkomponente relativ zur zweiten Sensorkomponente gekoppelt ist.

Wenn ein Gegenstand gehalten ist, so wird daher in gewissem Maße auch eine Bewegungskopplung zwischen Gegenstand und der ersten Sensorkomponente hergestellt. Beispielsweise kann der Gegenstand in kraftschlüssigem Kontakt mit der ersten Sensorkomponente stehen, wenn der Gegenstand an dem Anlageabschnitt gehalten ist. Eine Bewegung des Gegenstandes, z. B. ein Verrutschen oder eine Schwingung, wird daher auf die erste Sensorkomponente übertragen. Die Bewegung der ersten Sensorkomponente kann dann mittels der zweiten Sensorkomponente detektiert werden.

Eine seitliche Verschiebung der beiden Sensorkomponenten relativ zueinander ermöglicht es insbesondere, ein ungewolltes Verrutschen des gehaltenen Gegenstandes zu detektieren. Eine Überwachung des Abstandes der beiden Sensorkomponenten, beispielsweise in Richtung senkrecht zu der Anlagefläche (die den Anlageabschnitt bildet), kann dazu dienen, die auf den Gegenstand wirkende Kraft zu detektieren und/oder eine Präsenzkontrolle durchzuführen.

Somit wird eine einfache und zuverlässige Sensorvorrichtung bereitgestellt, mit welcher verschiedene Betriebskenngrößen ermittelt werden können. Es ist nur eine Sensorik erforderlich, um Positionsüberwachung, Anwesenheitskontrolle usw. für den gehaltenen Gegenstand zu realisieren. Eine Sensorik, welche direkt mit dem Gegenstand zusammenwirkt, ist nicht zwingend erforderlich.

Vorzugsweise ist die erste Sensorkomponente mit dem Anlageabschnitt bewegungsgekoppelt verbunden und/oder direkt an diesem angeordnet. Der Anlageabschnitt ist insbesondere derart ausgestaltet, dass er beim Halten des Gegenstandes direkt an dem Gegenstand anliegt und so dessen Bewegungen aufnehmen kann. Beispielsweise ist der Anlageabschnitt mit einer (insbesondere ebenen) Anlagefläche versehen, die an dem Gegenstand anliegt. Der Anlageabschnitt kann beispielsweise verformbar ausgebildet sein, um sich dem Gegenstand anpassen zu können. Denkbar ist, dass die erste Sensorkomponente in dem Anlageabschnitt eingebettet ist.

Die erste Sensorkomponente kann jedoch auch relativ zu dem Anlageabschnitt bewegbar angeordnet sein. Insbesondere weist dann die erste Sensorkomponente einen eigenen Kontaktabschnitt auf, welcher mit dem Gegenstand in Kontakt gebracht ist, wenn der Gegenstand an der Handhabungsvorrichtung gehalten ist. Dadurch überträgt sich die Bewegung des Gegenstandes auf die erste Sensorkomponente.

Die zweite Sensorkomponente ist vorzugsweise an dem Basisabschnitt fest angeordnet.

Grundsätzlich können die beiden Sensorkomponenten physisch voneinander getrennt ausgebildet sein, z.B. als zwei modulare und zusammenwirkende Baueinheiten. Denkbar ist aber auch, dass die beiden Sensorkomponenten physisch miteinander verbunden sein. Eine Bewegbarkeit relativ zueinander kann dann beispielsweise dadurch erreicht werden, dass die beiden Sensorkomponenten über eine Gelenkeinrichtung, einem elastischen Verbindungsglied oder Ähnliches aneinander befestigt sind.

Der Anlageabschnitt ist vorzugsweise elastisch deformierbar ausgebildet. Denkbar ist z.B., dass der Anlageabschnitt eine verformbare Dichtplatte, ein verformbarer Belag eines Greifers oder ein anliegender Abschnitt einer Saugglocke ist. Der Basisabschnitt ist demgegenüber insbesondere ein fester Körper, beispielsweise ein Gehäuse oder Träger. Vorzugsweise ist der elastisch deformierbare Anlageabschnitt an dem festen Basisabschnitt angeordnet. Dadurch werden Bereiche des elastisch deformierbaren Anlageabschnitts gegenüber dem Basisabschnitt verlagert, wenn der Anlageabschnitt an einem Gegenstand anliegt und der Gegenstand bewegt wird.

Die Sensoreinrichtung ist insbesondere derart ausgebildet, dass durch Überwachung des Abstandes der beiden Sensorkomponenten zueinander die auf den Anlageabschnitt wirkenden Kräfte ermittelbar sind. Hierzu kann die erste Sensorkomponente derart angeordnet sein, dass eine Deformationsstrecke ermittelbar ist, welche eine Deformation des Anlageabschnitts beim Übergang von einem unbelasteten Zustand zu einem Zustand mit korrekt gehaltenem Gegenstand charakterisiert. Hierzu ist insbesondere die erste Sensorkomponente mit dem elastisch verformbaren Anlageabschnitt verbunden. Sind die elastischen Eigenschaften des Materials des Anlageabschnitts bekannt, so kann die Deformationsstrecke in eine Kraft umgerechnet werden, welche auf den Anlageabschnitt wirkt.

Insbesondere ist die Sensoreinrichtung konkret dazu eingerichtet, eine Veränderung des Abstandes der ersten Sensorkomponente von der zweiten Sensorkomponente zu ermitteln und/oder den absoluten Abstand der ersten Sensorkomponente von der zweiten Sensorkomponente zu ermitteln.

Die Zusammenwirkung der ersten und zweiten Sensorkomponente kann auf verschiedenen technischen/physikalischen Wirkprinzipen beruhen. Insbesondere wirken die erste und die zweite Sensorkomponente kapazitiv, induktiv, magnetisch oder elektromagnetisch zusammen. Vorteilhaft kann auch ein optisches oder akustisches (z.B. über Ultraschall-Kopplung) Zusammenwirken vorgesehen sein. Es kann auch eine thermische Kopplung erfolgen, z.B. Detektion einer Wärmeabstrahlung der ersten Sensorkomponente durch die zweite Sensorkomponente. Denkbar ist grundsätzlich auch eine mechanische Einwirkung der ersten Sensorkomponente auf die zweite Sensorkomponente. Beispielsweise kann hierdurch piezoelektrische Veränderung oder Druckänderung erwirkt werden, die detektiert wird.

Nach einer vorteilhaften Ausgestaltung ist eine der beiden Sensorkomponenten als Hall-Sensor oder als Spulen-Sensor zur Messung von Magnetfeldstärke ausgebildet. Dies trifft vorzugsweise für die fest angeordnete zweite Sensorkomponente zu. Die jeweils andere Sensorkomponente (vorzugsweise die bewegbare erste Sensorkomponente) kann insbesondere als Permanent-Magnet ausgebildet sein. Auf diese Weise kann eine einfache und zuverlässige Sensoreinrichtung bereitgestellt werden.

Um magnetische und/oder elektromagnetische Störfelder aus der Umgebung abzuschirmen, und auf diese Weise die oben genannte Sensoreinrichtung zuverlässiger zu machen, kann der Anlageabschnitt und/oder der Basisabschnitt eine abschirmende Beschichtung oder sonstige Abschirmelemente aufweisen.

Eine präzise und schnelle Messung kann auch dadurch ermöglicht werden, dass die Sensoreinrichtung auf optischer Signalübertragung beruht. Hierzu kann eine der beiden Sensorkomponenten als Lichtquelle zur Abgabe einer definierten Strahlungsintensität ausgebildet sein und die andere Sensorkomponente als Strahlungssensor (z.B. Fotodiode) ausgebildet sein.

Grundsätzlich weist die Handhabungsvorrichtung einen Haltekrafteffektor auf, also eine Einrichtung, mittels welcher eine Haltekraft auf den Gegenstand ausübbar ist. Vorzugsweise ist der Haltekrafteffektor eine Einrichtung zur Ausübung einer Haltekraft mittels Unterdruck. Insbesondere weist die Handhabungsvorrichtung eine Saugöffnung oder einen Saugraum auf, wobei der Gegenstand mittels eines in der Saugöffnung bzw. des im Saugraum wirkenden Unterdrucks ansaugbar ist. Der Anlageabschnitt ist dann insbesondere im Bereich der Saugöffnung oder des Saugraumes ausgebildet. Denkbar ist auch, dass der Haltekrafteffektor zur Ausübung einer mechanischen Klemmkraft ausgebildet ist und einen entsprechenden Aktor aufweist, welcher in eine Anfangskonfiguration und in eine Endkonfiguration veränderbar ist, wobei in einer der Konfigurationen der Gegenstand freigegeben wird und in der anderen der Gegenstand gehalten wird.

Erfindungsgemäß ist die Handhabungsvorrichtung als Unterdruck-Handhabungsvorrichtung ausgebildet und weist einen elastisch deformierbaren Saugkörper auf. Der Anlageabschnitt ist an einem Bereich des Saugkörpers ausgebildet, der dem gehaltenen Gegenstand zugewandt ist. Der Saugkörper ist insbesondere an einem Anschlusselement angeordnet bzw. mit diesem verbunden. Das Anschlusselement bildet dann den Basisabschnitt. Der Saugkörper kann insbesondere als Saugglocke oder Faltenbalgsauger ausgestaltet sein. Die erste Sensorkomponente ist vorzugsweise in einer Dichtlippe oder in einem Wandungsabschnitt des Saugkörpers angeordnet, welcher bei Bewegung des Gegenstandes mitbewegt wird. Das genannte Anschlusselement kann beispielsweise ein Nippel des Saugers sein. Der Saugkörper kann aber auch als Saugabschnitt einer Saug-Spannvorrichtung (z.B. Blocksauger) ausgestaltet sein. Hier kann der Saugkörper beispielsweise von einer Dichtplatte gebildet sein, welche Saugöffnungen aufweist, durch welche der Gegenstand ansaugbar ist.

Eine andere vorteilhafte Ausgestaltung ergibt sich dadurch, dass die Unterdruck-Handhabungsvorrichtung einen elastisch deformierbaren Saugkörper aufweist, wobei der Anlageabschnitt an einem Bereich des Saugkörpers ausgebildet ist, der dem gehaltenen Gegenstand zugewandt ist, und wobei die erste Sensorkomponente an diesem Anlageabschnitt angeordnet ist. Die zweite Sensorkomponente ist dann an einem Bereich des Saugkörpers angeordnet, welcher dem Anlageabschnitt abgewandt ist. Insofern kann der abgewandte Bereich einen Basisabschnitt im vorherigen Sinne bilden, da der abgewandte Bereich bei der Handhabung des Gegenstandes nicht oder weniger stark deformiert wird (verglichen mit dem Anlageabschnitt). Auch hier ist der Saugkörper insbesondere als Saugglocke oder Faltenbalgsauger ausgebildet. Die erste Sensorkomponente ist vorzugsweise in einer Dichtlippe oder in einem Wandungsabschnitt dieses Saugkörpers angeordnet. Die zweite Sensorkomponente kann beispielsweise an einem Trageelement angeordnet sein, welches innerhalb des Saugkörpers, vorzugsweise in einem durch den Saugkörper begrenzten Saugraum angeordnet ist.

Wie erwähnt, kann die Handhabungsvorrichtung auch einen Aktor zur Einbringung einer mechanischen Klemmkraft aufweisen. Insbesondere ist ein druckangetriebener Aktor vorgesehen, welcher den Anlageabschnitt bereitstellt, wobei der Aktor einen Aktorraum aufweist, der zumindest abschnittsweise von einer verformbaren Wandung begrenzt ist. Die Wandung und der Aktorraum sind derart ausgebildet, dass der Aktor durch Beaufschlagung des Aktorraumes mit Druck betätigbar ist. Der Aktor geht dabei mit Verformung der verformbaren Wandung von einer Anfangskonfiguration in eine Endkonfiguration über. In einer der beiden Konfigurationen ist der Gegenstand gehalten, in der anderen freigegeben. Die erste Sensorkomponente ist vorzugsweise in der verformbaren Wandung eingebettet oder an der verformbaren Wandung angeordnet. Beispiele für derartige Handhabungsvorrichtungen sind Fingergreifer, wobei ein Finger durch den genannten Aktor gebildet ist und in seiner Endkonfiguration den Gegenstand hält und in der Anfangskonfiguration den Gegenstand freigibt.

Die Sensoreinrichtung wird vorzugsweise ausschließlich durch die beiden zusammenwirkenden Sensorkomponenten gebildet. Insbesondere ist je eine Sensorkomponente kein für sich funktionsfähiger Sensor, sondern eine Sensorwirkung wird erst durch Zusammenwirken der beiden Sensorkomponenten erzielt.

Die eingangs gestellte Aufgabe wird auch gelöst durch ein Verfahren zur Überwachung eines Handhabungsvorgangs. Der Handhabungsvorgang wird insbesondere mit einer Handhabungsvorrichtung der vorstehend beschriebenen Art durchgeführt. Gemäß dem Verfahren wird ein Gegenstand mit dem Anlageabschnitt der Handhabungsvorrichtung in Kontakt gebracht und eine Haltekraft auf den Gegenstand ausgeübt. Während der Gegenstand gehalten ist und/oder während des gesamten Handhabungsvorgangs wird gemäß dem Verfahren eine Veränderung der Position der ersten Sensorkomponente relativ zur zweiten Sensorkomponente und/oder eine Veränderung des Abstands der ersten Sensorkomponente relativ zur zweiten Sensorkomponente ermittelt. Wie erläutert, kann durch Ermittlung einer lateralen Positionsänderung (z.B. entlang einer ebenen Anlagefläche) ein Verrutschen des gehaltenen Gegenstandes ermittelt werden. Durch Ermittlung der Positionsänderung senkrecht zur Anlagefläche, insbesondere durch Ermittlung des Abstandes zwischen den beiden Sensorkomponenten, kann eine Präsenzkontrolle für einen gehaltenen Gegenstand durchgeführt werden. Außerdem kann festgestellt werden, ob und in welchem Maße eine Haltekraft auf den Gegenstand ausgeübt wird.

Die Erfindung wird im Folgenden anhand der Figuren näher erläutert.

Es zeigen:
- Figur 1: eine erfindungsgemäße Handhabungsvorrichtung, die einen Unterdrucksauggreifer aufweist, im Zustand mit bestimmungsgemäß anliegendem Werkstück;
- Figur 2: die Vorrichtung gemäß Figur 1, wobei auf den gehaltenen Gegenstand eine laterale Kraft ausgeübt ist und der Gegenstand verrutscht;
- Figur 3: eine erfindungsgemäße Handhabungsvorrichtung, welche als Spannvorrichtung ausgestaltet ist, im Betriebszustand mit gespanntem Werkstück;
- Figur 4: Vorrichtung gemäß Figur 3 mit seitlich verrutschendem Gegenstand;
- Figur 5: eine weitere Ausgestaltung einer erfindungsgemäßen Spannvorrichtung,
- Figur 6: weitere Ausgestaltung einer erfindungsgemäßen Spannvorrichtung;
- Figur 7: eine weitere Ausführungsform einer erfindungsgemäßen Handhabungsvorrichtung als Faltenbalg-Sauger im bestimmungsgemäßen Betriebszustand;
- Figur 8: Vorrichtung gemäß Figur 7 mit seitlich wirkenden Kräften auf dem gehaltenen Gegenstand;
- Figur 9: skizzierte Darstellung zur Erläuterung weiterer Ausgestaltungen für einen erfindungsgemäßen Unterdruck-Faltenbalgsauger;
- Figur 10: skizzierte Darstellungen zur Erläuterung weiterer Ausgestaltungen;
- Figur 11: eine erfindungsgemäße Handhabungsvorrichtung, welche als Finger-Greifer mit Druck angetriebenem Aktor ausgestaltet ist, im Betriebszustand mit freigegebenem Gegenstand; und
- Figur 12: Vorrichtung gemäß Figur 11 mit gegriffenem Gegenstand.

In der nachfolgenden Beschreibung sowie in den Figuren sind für identische oder einander entsprechende Merkmale jeweils dieselben Bezugszeichen verwendet.

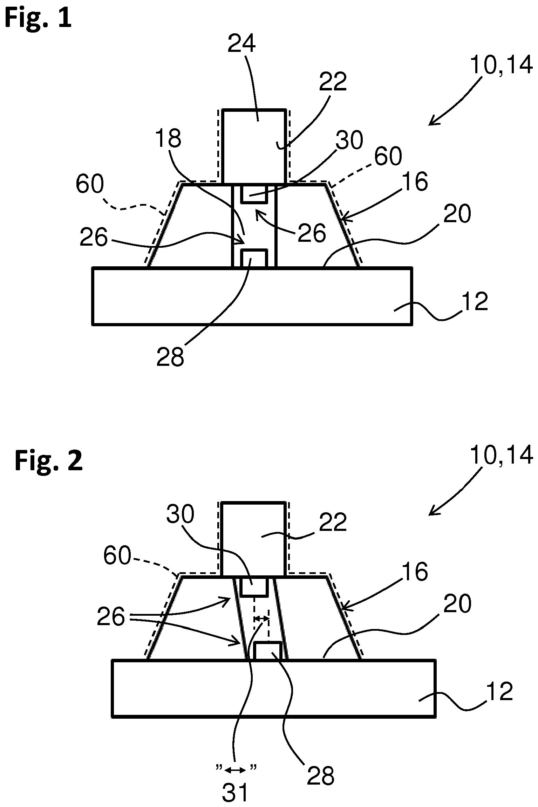

Die Figuren 1 und 2 zeigen eine Handhabungsvorrichtung 10 zum Handhaben und Halten eines Gegenstandes 12. Die Handhabungsvorrichtung 10 umfasst im dargestellten Beispiel einen Unterdruckgreifer 14. Die Handhabungsvorrichtung 10 weist hierbei einen elastisch verformbaren Saugkörper 16 auf, der z.B. in der Art einer Saugglocke ausgestaltet ist.

Der Saugkörper 16 begrenzt einen Saugraum 18, welcher in Richtung zu dem Gegenstand 12 hin geöffnet ist und mit Unterdruck beaufschlagbar ist, um den Gegenstand 12 anzusaugen, d.h. eine Haltekraft auszuüben. Der den Gegenstand 12 zugewandte Bereich des Saugkörpers 16 bildet einen Anlageabschnitt 20 der Handhabungsvorrichtung 10. Der Anlageabschnitt 20 wird insofern zum Halten des Gegenstandes 12 an diesen herangeführt und mit dem Gegenstand 12 in Kontakt gebracht.

Der Saugkörper 16 ist an einem Basisabschnitt 22 der Handhabungsvorrichtung 12 angeordnet. Der Basisabschnitt 22 ist als festes Bauteil ausgestaltet, im dargestellten Beispiel als Anschlusselement 24 des Unterdruckgreifers 14.

Die Handhabungsvorrichtung 10 umfasst eine Sensoreinrichtung 26, die im dargestellten Beispiel zwei Sensorkomponenten umfasst, nämlich eine erste Sensorkomponente 28 und eine zweite Sensorkomponente 30.

Die erste Sensorkomponente 28 ist an einem Bereich des elastisch verformbaren Saugkörpers 16 angeordnet, der in Kontakt mit dem Gegenstand 12 ist (beispielsweise an dem Anlageabschnitt 20). Insbesondere liegt dann, wenn eine Haltekraft auf den Gegenstand 12 ausgeübt wird, der Anlageabschnitt 20 kraftschlüssig an dem Gegenstand 12 an. Bei einer Bewegung des Gegenstandes 12 wird daher die erste Sensorkomponente 28 zumindest teilweise mitbewegt.

Die zweite Sensorkomponente 30 ist an dem Basisabschnitt 22 ortsfest angeordnet. Somit kann mittels der Sensoreinrichtung 26 eine Relativbewegung von erster Sensorkomponente 28 zur zweiten Sensorkomponente 30 ermittelt werden.

In der Figur 2 ist skizziert, wie die erste Sensorkomponente 28 dann, wenn der Gegenstand 12 an dem Anlageabschnitt 20 gehalten ist, mit dem Gegenstand 12 bewegungsgekoppelt ist in dem Sinne, dass eine Verlagerung des Gegenstands 12 relativ zu dem Basisabschnitt 22 ebenfalls mit einer Verlagerung der ersten Sensorkomponente 28 relativ zu dem Basisabschnitt 22 verbunden ist. In der Darstellung gemäß Figur 2 ist der Gegenstand 12 mit einer in Bezug auf den Anlageabschnitt 20 seitlich wirkenden Kraft beaufschlagt, so dass der Gegenstand 12 seitlich in Bezug auf den Basisabschnitt 22 verlagert wird. Hierbei nimmt der Gegenstand 12 den Anlageabschnitt 20 und somit die erste Sensorkomponente 28 mit, was zu einer Verschiebung der ersten Sensorkomponente relativ zur zweiten Sensorkomponente um eine Deformationsstrecke 31 führt. Dies kann mittels der Sensoreinrichtung 26 detektiert werden. Aus der Deformationsstrecke 31 kann dann z.B. über das bekannte Elastizitätsmodul des Saugkörpers 16 die auf den Gegenstand 12 wirkende Kraft ermittelt werden.

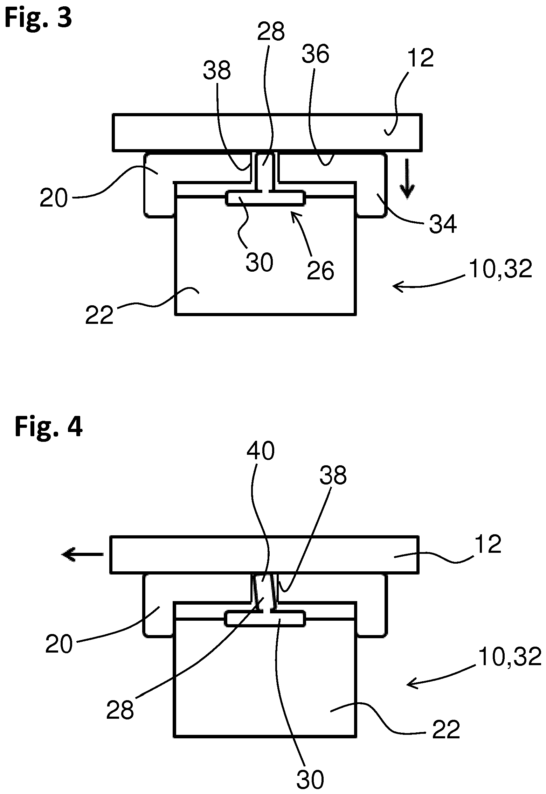

Anhand der Figuren 3 und 4 wird eine weitere Handhabungsvorrichtung 10 erläutert, welche als Spannvorrichtung 32 ausgestaltet ist. Insbesondere handelt es sich um eine Unterdruck-Spannvorrichtung (Blocksauger). Der Basisabschnitt 22 wird z.B. an einer Konsole oder einem Werkzeugtisch fixiert. Der Anlageabschnitt 20 wird von einer in gewissem Maße flexibel verformbaren Dichtplatte 34 bereitgestellt. Insbesondere weist der Anlageabschnitt 20 eine im Wesentlichen ebene Anlagefläche 36 auf, welche zum Fixieren des Gegenstandes 12 an diesem anliegt. Eine Haltekraft wird dadurch ausgeübt, dass der Gegenstand 12 durch eine Saugöffnung 38 in der Dichtplatte 34 angesaugt wird.

Die Sensoreinrichtung 26 umfasst im dargestellten Beispiel eine erste Sensorkomponente 28, welche abwinkelbar an der zweiten Sensorkomponente 30 angeordnet ist. Die zweite Sensorkomponente 30 ist an dem Basisabschnitt 22 fixiert. Die erste Sensorkomponente 28 weist einen Kontaktbereich 40 auf (vgl. Figur 4), welcher mit dem gehaltenen Werkstück 12 derart in Kontakt ist, dass er bei Bewegung des Werkstückes 12 mitbewegt wird. Dabei wird die erste Sensorkomponente 28 gegenüber der zweiten Sensorkomponente 30 abgewinkelt (vgl. Figur 4).

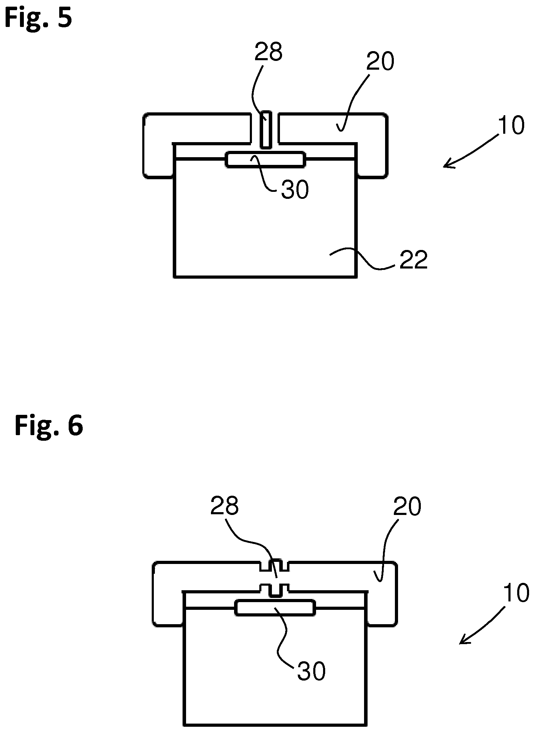

Die Figuren 5 und 6 zeigen exemplarisch anhand der Spannvorrichtung 32 alternative Ausgestaltungen, insbesondere im Hinblick darauf, wie die erste Sensorkomponente 28 beweglich relativ zu der zweiten Sensorkomponente 30 angeordnet sein kann.

Grundsätzlich kann, wie in der Figur 5 angedeutet, die erste Sensorkomponente 28 physisch von der zweiten Sensorkomponente 30 getrennt ausgebildet sein. Zusätzlich kann die erste Sensorkomponente 28 auch physisch von dem Anlageabschnitt getrennt ausgebildet sein. Beispielsweise kann die Sensorkomponente 28 formschlüssig in einer geeigneten Aussparung des Anlageabschnitts 20 gehalten sein. Dies ermöglicht es, dass die Sensorkomponente 28 sensibel auf Bewegungen eines Gegenstandes anspricht.

Eine grundsätzliche Gestaltungsmöglichkeit besteht darin, dass die erste Sensorkomponente 28 integral mit dem insbesondere flexibel verformbaren Anlageabschnitt 20 ausgestaltet ist. Im Beispiel der Figur 6 ist die erste Sensorkomponente 28 in den Anlageabschnitt 20 eingebettet.

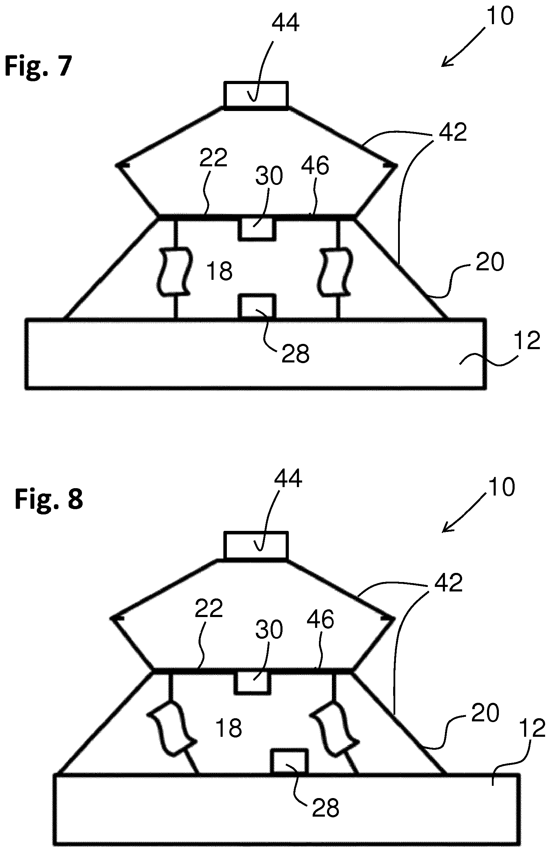

Die Figuren 7 und 8 zeigen eine Handhabungsvorrichtung 10, welche einen Faltenbalg-Sauger 42 aufweist, der insofern einen deformierbaren Saugkörper bildet. Ein unterer Abschnitt des Faltenbalg-Saugers 42 stellt den Anlageabschnitt 20 bereit, der zum Greifen des Gegenstandes 12 an diesem anliegt. Der Faltenbalg-Sauger 42 umschließt wiederum einen nach unten offenen Saugraum 18, der durch ein Anschlussstück 44 mittels Unterdruck beaufschlagbar ist, um die Haltekraft auszuüben. Der Basisabschnitt 22, an dem die zweite Sensorkomponente 30 ortsfest angeordnet ist, wird im dargestellten Beispiel von einem Trageelement 46 bereitgestellt. Das Trageelement 46 ist im Innern des Saugraumes 18 angeordnet und durchspannt diesen. Insbesondere kann das Trageelement 46 als eine den Saugraum 18 durchspannende Strebe oder Platte ausgebildet sein. Durch diese Konstruktion wird ermöglicht, dass beim Halten eines Gegenstandes 12, auch bei Deformation des Anlageabschnitts 20 durch ein Verschieben des Gegenstandes 12 (vgl. Figur 8) die zweite Sensorkomponente 30 ortsfest verbleibt.

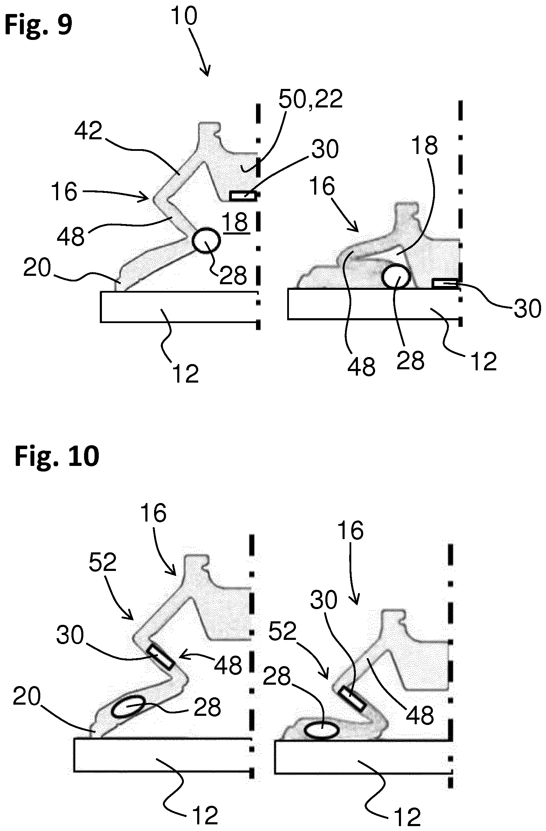

Die Figur 9 zeigt in skizzierter Darstellung einen Querschnitt durch einen Faltenbalg-Sauger 42 einer weiteren Handhabungsvorrichtung 10. Hierbei weist allgemein gesprochen der Saugkörper 16 eine flexible Wandung 48 auf. Wie in der Figur 9 erkennbar, ist die erste Sensorkomponente 28 an der flexiblen Wandung 48 angeordnet. Denkbar ist auch, dass die erste Sensorkomponente 28 in der flexiblen Wandung 48 des Saugkörpers 16 eingebettet oder integriert ist. Die zweite Sensorkomponente 30 ist an einem Grundabschnitt 50 des Saugkörpers 16 angeordnet, der insofern einen Basisabschnitt 22 bildet. Wie in der rechten Skizze der Figur 9 dargestellt, verringert sich das Volumen des Saugraumes 18 in dem Saugkörper 16, wenn zur Ausübung einer Haltekraft auf den Gegenstand 12 der Saugraum 18 mit Unterdruck beaufschlagt wird. Dabei verformt sich die flexible Wandung 48 und die erste Sensorkomponente 28 verändert ihre Position relativ zur zweiten Sensorkomponente 30.

Wie in der Figur 10 angedeutet, kann die zweite Sensorkomponente 30 auch an einem Bereich 52 des Saugkörpers 16 angeordnet sein, welcher von dem Anlageabschnitt 20 abgewandt ist und sich bei der Handhabung des Gegenstandes 12 nicht oder nur wenig deformiert.

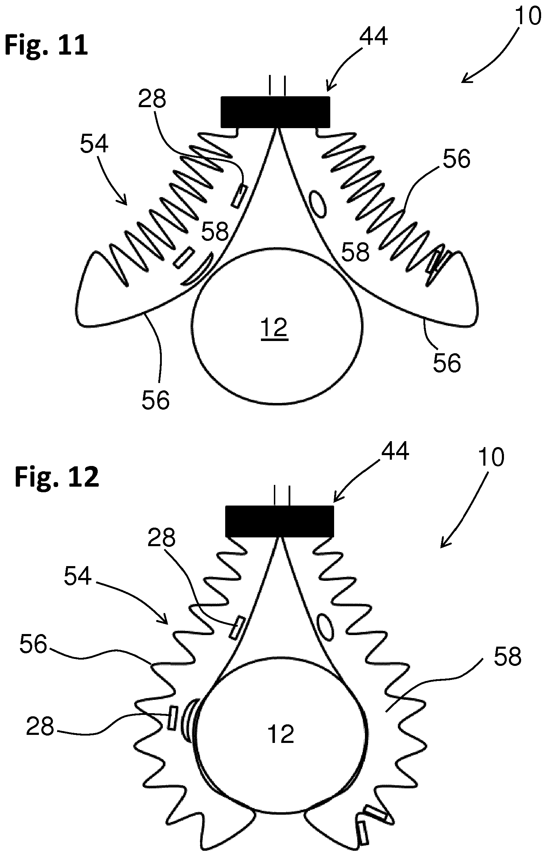

Die Figuren 11 und 12 zeigen eine Handhabungsvorrichtung 10, welche einen druckangetriebenen Aktor 54 umfasst. Der druckangetriebene Aktor 54 ist in der Art eines Fingergreifers ausgebildet, der zwischen einer Anfangskonfiguration (Figur 11) und einer Endkonfiguration (Figur 12) veränderbar ist. In der Anfangskonfiguration ist der Gegenstand 12 freigegeben, in der Endkonfiguration ist der Gegenstand 12 von dem Aktor 54 zum Greifen umschlossen.

Der Aktor 54 weist eine flexibel verformbare Wandung 56 auf, welche einen Aktorraum 58 umschließt. Durch Beaufschlagung des Aktorraumes 58 mit einem Druckfluid kann der Aktor 54 zwischen Anfangskonfiguration und Endkonfiguration verändert werden, wobei sich die flexible Wandung 56 verformt. Die erste Sensorkomponente 28 ist vorzugsweise an der flexibel verformbaren Wandung 56 angeordnet. Die zweite Sensorkomponente 30 kann in einem Anschlussstück 44 vorgesehen sein, an welchem der Aktor 54 angeordnet ist. Denkbar ist jedoch auch, dass die zweite Sensorkomponente 30 an solchen Bereichen des Aktors 54 angeordnet ist, relativ zu welchen sich die erste Sensorkomponente 28 beim Übergang zwischen Anfangskonfiguration und Endkonfiguration bewegt (siehe Figuren 11 und 12).

Die Sensoreinrichtung 26 kann verschiedene physikalische Wirkprinzipien ausnutzen. Insbesondere kann vorteilhaft sein, wenn die zweite Sensorkomponente 30 als Hall-Sensor zur Messung von Magnetfeldstärke ausgebildet ist. Die erste Sensorkomponente kann dann beispielsweise als Permanent-Magnet ausgebildet sein. Bei derartigen Ausgestaltungen kann es vorteilhaft sein, wenn der Anlageabschnitt 20 und/oder der Basisabschnitt 22 mit einer Abschirmung 60 (z.B. Beschichtung) gegen magnetische und/oder elektromagnetische Störfelder versehen ist (skizziert in Figur 1).

## Patentansprüche

1. Handhabungsvorrichtung (10) zum Halten von Gegenständen (12), insbesondere Greifvorrichtung oder Spannvorrichtung, mit einem Basisabschnitt (22) und einem Anlageabschnitt (20), wobei der Anlageabschnitt (20) beim Halten des Gegenstandes (12) an den Gegenstand (12) anliegt,
und mit einer Sensoreinrichtung (26) aufweisend eine erste Sensorkomponente ((28) und eine zweite Sensorkomponente (30), wobei die beiden Sensorkomponenten (28, 30) zur Ermittlung von Betriebskenngrößen der Handhabungsvorrichtung (10) zusammenwirken,
**wobei** die Sensoreinrichtung (26) dazu eingerichtet ist, eine Veränderung der Position der ersten Sensorkomponente (28) relativ zu der zweiten Sensorkomponente (30) zu ermitteln,
und dass die erste Sensorkomponente (28) derart ausgebildet und angeordnet ist, dass dann, wenn ein Gegenstand (12) an dem Anlageabschnitt (20) anliegt und gehalten ist, eine Verlagerung des Gegenstandes (12) relativ zu dem Basisabschnitt (22) mit einer Verlagerung der ersten Sensorkomponente (28) relativ zu dem Basisabschnitt (22) verbunden ist,
und dass die zweite Sensorkomponente (30) in einer festen Position relativ zu dem Basisabschnitt (22) angeordnet ist, wobei die Sensoreinrichtung (26) dazu eingerichtet ist, den Abstand der ersten Sensorkomponente von der zweiten Sensorkomponente zu ermitteln, **dadurch gekennzeichnet, dass** die Handhabungsvorrichtung (10) dazu ausgebildet ist, den Gegenstand (12) mittels Unterdruck zu halten,
umfassend einen elastisch deformierbaren Saugkörper (16), wobei der Anlageabschnitt (20) an einem Bereich des Saugkörpers (16) ausgebildet ist, der dem gehaltenen Gegenstand (12) zugewandt ist.

2. Handhabungsvorrichtung (10) nach Anspruch 1, wobei die erste Sensorkomponente (28) mit dem Anlageabschnitt (20) bewegungsgekoppelt verbunden ist.

3. Handhabungsvorrichtung (10) nach Anspruch 1, wobei die erste Sensorkomponente (28) relativ zum Anlageabschnitt (20) bewegbar angeordnet ist.

4. Handhabungsvorrichtung (10) nach einem der vorherigen Ansprüche, wobei die zweite Sensorkomponente (30) an dem Basisabschnitt (22) fest angeordnet ist.

5. Handhabungsvorrichtung (10) nach einem der vorherigen Ansprüche, wobei der Anlageabschnitt (20) elastisch deformierbar ausgebildet ist.

6. Handhabungsvorrichtung (10) nach dem vorherigen Anspruch, wobei die erste Sensorkomponente (28) derart angeordnet ist, dass eine Deformationsstrecke (31) ermittelbar ist, welche eine Deformation des Anlageabschnitts (20) beim Übergang von einem unbelasteten Zustand zu einem Zustand mit gehaltenem Gegenstand (62) charakterisiert.

7. Handhabungsvorrichtung (10) nach einem der vorherigen Ansprüche, wobei die Sensoreinrichtung (26) dazu eingerichtet ist, eine Veränderung des Abstandes der ersten Sensorkomponente (28) von der zweiten Sensorkomponente (30) zu ermitteln.

8. Handhabungsvorrichtung (10) nach einem der vorherigen Ansprüche, wobei eine der beiden Sensorkomponenten (30) als Hall-Sensor oder als Spulen-Sensor zur Messung von Magnetfeldstärke und die andere Sensorkomponente als Permanentmagnet ausgebildet ist.

9. Handhabungsvorrichtung (10) nach dem vorherigen Anspruch, wobei der Anlageabschnitt (20) und/oder der Basisabschnitt (22) eine Abschirmung (60) gegen magnetische und/oder elektromagnetische Störfelder aus der Umgebung aufweist.

10. Handhabungsvorrichtung nach einem der vorherigen Ansprüche, wobei eine der beiden Sensorkomponenten (28, 30) als Lichtquelle zur Abgabe einer definierten Strahlungsintensität und die andere Sensorkomponente (30, 28) als Strahlungssensor ausgebildet ist.

11. Handhabungsvorrichtung (10) nach einem der vorherigen Ansprüche, wobei der Saugkörper an einem Anschlusselement (24) angeordnet ist, welches den Basisabschnitt (22) bildet.

12. Handhabungsvorrichtung (10) nach einem der Ansprüche 1 - 10, welche dazu ausgebildet ist, den Gegenstand (12) mittels Unterdruck zu halten, umfassend einen elastisch deformierbaren Saugkörper (16), wobei der Anlageabschnitt (20) an einem Bereich des Saugkörpers (16) ausgebildet ist, der dem gehaltenen Gegenstand (12) zugewandt ist, und wobei die erste Sensorkomponente (28) an dem Anlageabschnitt (20) angeordnet ist und die zweite Sensorkomponente (30) an einem dem Anlageabschnitt (20) abgewandten Bereich (52) des Saugkörpers (16) angeordnet ist.

13. Handhabungsvorrichtung (10) nach einem der Ansprüche 1 - 10, welche einen druckangetriebene Aktor (54) umfasst, welcher den Anlageabschnitt (20) bereitstellt, wobei der Aktor (54) einen Aktorraum (58) aufweist, der zumindest abschnittsweise von einer flexibel verformbaren Wandung (56) derart begrenzt ist, dass der Aktor (54) durch Beaufschlagung des Aktorraumes (58) mit Druck betätigbar ist, wobei der Aktor (54) bei Verformung der flexibel verformbaren Wandung (56) von einer Anfangskonfiguration in eine Endkonfiguration übergeht, wobei die erste Sensorkomponente (28) in der verformbaren Wandung (56) eingebettet oder an der verformbaren Wandung (56) angeordnet ist.

14. Handhabungsvorrichtung (10) nach einem der vorherigen Ansprüche, wobei die Sensoreinrichtung (26) derart ausgebildet ist, dass die Ermittlung des Messergebnisses ausschließlich durch Zusammenwirken der ersten Sensorkomponente (28) mit der zweiten Sensorkomponente (30) erfolgt.

15. Verfahren zur Überwachung eines Handhabungsvorgangs mit einer Handhabungsvorrichtung gemäß einem der vorherigen Ansprüche, wobei ein Gegenstand mit dem Anlageabschnitt der Handhabungsvorrichtung in Kontakt gebracht wird und eine Veränderung der Position der ersten Sensorkomponente relativ zur zweiten Sensorkomponente und der Abstand der ersten Sensorkomponente von der zweiten Sensorkomponente ermittelt wird.

## Claims

1. Handling device (10) for holding objects (12), in particular a gripping device or clamping device, comprising a base portion (22) and a contact portion (20), the contact portion (20) bearing against the object (12) when the object (12) is held,
and comprising a sensor apparatus (26) having a first sensor component (28) and a second sensor component (30), the two sensor components (28, 30) interacting to determine operating parameters of the handling device (10),
the sensor apparatus (26) being designed to determine a change in the position of the first sensor component (28) relative to the second sensor component (30),
the first sensor component (28) being designed and arranged such that, when an object (12) bears against and is held on the contact portion (20), a displacement of the object (12) relative to the base portion (22) is connected to a displacement of the first sensor component (28) relative to the base portion (22),
and the second sensor component (30) being arranged in a fixed position relative to the base portion (22), the sensor apparatus (26) being designed to determine the distance between the first sensor component and the second sensor component, **characterized in that** the handling device (10) is designed to hold the object (12) by means of negative pressure,
comprising an elastically deformable suction body (16), the contact portion (20) being formed on a region of the suction body (16) that faces the held object (12).

2. Handling device (10) according to claim 1, wherein the first sensor component (28) is connected to the contact portion (20) in a movement-coupled manner.

3. Handling device (10) according to claim 1, wherein the first sensor component (28) is arranged so as to be movable relative to the contact portion (20).

4. Handling device (10) according to any of the preceding claims, wherein the second sensor component (30) is fixedly arranged on the base portion (22).

5. Handling device (10) according to any of the preceding claims, wherein the contact portion (20) is designed to be elastically deformable.

6. Handling device (10) according to the preceding claim, wherein the first sensor component (28) is arranged such that a deformation path (31) can be determined that characterizes a deformation of the contact portion (20) during the transition from an unloaded state to a state in which an object is held (62).

7. Handling device (10) according to any of the preceding claims, wherein the sensor apparatus (26) is designed to determine a change in the distance between the first sensor component (28) and the second sensor component (30) .

8. Handling device (10) according to any of the preceding claims, wherein one of the two sensor components (30) is designed as a Hall sensor or as a coil sensor for measuring magnetic field strength, and the other sensor component is designed as a permanent magnet.

9. Handling device (10) according to the preceding claim, wherein the contact portion (20) and/or the base portion (22) has shielding (60) against magnetic and/or electromagnetic interference fields from the surroundings.

10. Handling device according to any of the preceding claims, wherein one of the two sensor components (28, 30) is designed as a light source for emitting a defined radiation intensity, and the other sensor component (30, 28) is designed as a radiation sensor.

11. Handling device (10) according to any of the preceding claims, wherein the suction body is arranged on a connection element (24) which forms the base portion (22).

12. Handling device (10) according to any of claims 1 to 10, which is designed to hold the object (12) by means of negative pressure, comprising an elastically deformable suction body (16), wherein the contact portion (20) is formed on a region of the suction body (16) that faces the held object (12), and wherein the first sensor component (28) is arranged on the contact portion (20) and the second sensor component (30) is arranged on a region (52) of the suction body (16) that faces away from the contact portion (20).

13. Handling device (10) according to any of claims 1 to 10, which comprises a pressure-driven actuator (54) which provides the contact portion (20), wherein the actuator (54) has an actuator chamber (58) which is delimited at least in portions by a flexibly deformable wall (56) such that the actuator (54) can be actuated by applying pressure to the actuator chamber (58), wherein the actuator (54) transitions from an initial configuration to an end configuration when the flexibly deformable wall (56) is deformed, wherein the first sensor component (28) is embedded in the deformable wall (56) or is arranged on the deformable wall (56).

14. Handling device (10) according to any of the preceding claims, wherein the sensor apparatus (26) is designed such that the measurement result is determined exclusively by the interaction of the first sensor component (28) with the second sensor component (30).

15. Method for monitoring a handling process using a handling device according to any of the preceding claims, wherein an object is brought into contact with the contact portion of the handling device, and a change in the position of the first sensor component relative to the second sensor component and in the distance between the first sensor component and the second sensor component is determined.

## Revendications

1. Dispositif de manipulation (10) pour tenir des objets (12) notamment dispositif de préhension ou dispositif de serrage comprenant: un segment de base (22) et un segment d'appui (20), venant s'appuyer contre l'objet (12),
et une installation de capteur (26) comprenant un premier composant de capteur (28) et un second composant de capteur (30), les deux composants de capteur (28, 30) coopérant pour déterminer les paramètres de fonctionnement du dispositif de manipulation (10),
dispositif dans lequel l'installation de capteur (26) est conçue pour déterminer la variation de position du premier composant de capteur (28) par rapport au second composant de capteur (30),
et le premier composant de capteur (28) est réalisé et disposé pour que lorsqu'un objet (12) est appliqué contre le segment d'appui (20) et est tenu, le déplacement de l'objet (12) par rapport au segment de base (22) se traduit par un déplacement du premier composant de capteur (28) par rapport au segment de base (22),
et le second composant de capteur (30) est dans une position fixe par rapport au segment de base (22), l'installation de capteur (26) est conçue pour déterminer la distance entre le premier composant de capteur et le second composant de capteur, dispositif de manipulation (10) **caractérisé en ce que**: il est réalisé pour tenir l'objet (12) par dépression, avec une ventouse (16) déformable élastiquement, le segment d'appui (20) étant réalisé sur une zone de la ventouse (16) tournée vers l'objet à tenir (12).

2. Dispositif de manipulation (10) selon la revendication 1, dans lequel le premier composant de capteur (28) est relié au segment d'appui (20) de façon couplée en mouvement.

3. Dispositif de manipulation (10) selon la revendication 1, dans lequel le premier composant de capteur (28) est mobile par rapport au segment d'appui (20).

4. Dispositif de manipulation (10) selon l'une des revendications précédentes, dans lequel le second composant de capteur (30) est monté fixe sur le segment de base (22).

5. Dispositif de manipulation (10) selon l'une des revendications précédentes, dans lequel le segment d'appui (20) est réalisé de manière à être déformable élastiquement.

6. Dispositif de manipulation (10) selon l'une des revendications précédents, dans lequel le premier composant de capteur (28) est disposé pour déterminer un trajet de déformation (31) qui caractérise la déformation du segment d'appui (20) au passage de l'état non chargé à l'état chargé avec le produit (12).

7. Dispositif de manipulation (10) selon l'une des revendications précédentes, dans lequel l'installation de capteur (26) est conçue pour déterminer une variation de la distance entre le premier composant de capteur (28) et le second composant de capteur (30).

8. Dispositif de manipulation (10) selon l'une des revendications précédents, dans lequel l'un des deux composants de capteur (30) est un capteur hall ou un capteur à bobine pour mesurer l'intensité du champ magnétique et l'autre composant de capteur est un aimant permanent.

9. Dispositif de manipulation (10) selon l'une des revendications précédentes, dans lequel le segment d'appui (20) et/ou le segment de base (22) comportent un blindage (60) contre les champs parasites, magnétiques et/ou électromagnétiques de l'environnement.

10. Dispositif de manipulation (10) selon l'une des revendications précédentes, dans lequel l'un des deux composants de capteur (28, 30) est sous la forme d'une source lumineuse pour émettre une intensité de rayonnement, définie et l'autre composant de capteur (30, 28) est un capteur de rayonnement.

11. Dispositif de manipulation (10) selon l'une des revendications précédentes, dans lequel la ventouse est prévue sur un élément de raccordement (24) qui forme le segment de base (22).

12. Dispositif de manipulation (10) selon l'une des revendications 1 à 10, qui est réalisé pour tenir l'objet (12) par dépression, et comprenant une ventouse (16) déformable élastiquement, le segment d'appui (20) étant prévu dans une zone de la ventouse (16) tournée vers l'objet à tenir (12), et le premier composant de capteur (28) est prévu sur le segment d'appui (20) et le second composant de capteur (30) est prévu sur un zone (52) de la ventouse (16) non tournée vers le segment d'appui (20) .

13. Dispositif de manipulation (10) selon l'une des revendications 1 à 10, comprenant un actionneur (54) entraîné par pression et qui fournit le segment d'appui (20), l'actionneur (54) ayant une cavité d'actionneur (58) délimitée au moins partiellement par une paroi (56) déformable de manière flexible, l'actionneur (54) est activé par la mise en pression de la cavité d'actionneur (58), l'actionneur (54) passant d'une configuration initiale à une configuration finale par la déformation de la paroi (56) flexible déformable, le premier élément de capteur (28) étant intégré dans la paroi déformable (56) ou prévu sur la paroi déformable (56).

14. Dispositif de manipulation (10) selon l'une des revendications précédentes, dans lequel l'installation de capteur (26) est réalisé pour déterminer le résultat de la mesure exclusivement par la coopération du premier élément de capteur (28) avec le second élément de capteur (30) .

15. Procédé de surveillance d'une opération de manipulation avec un dispositif de manipulation selon l'une des revendications précédentes, selon lequel on met en contact un objet avec le segment d'appui du dispositif de manipulation, et on détermine la variation de position du premier composant de capteur par rapport au second composant de capteur et la distance du premier composant de capteur par rapport au second composant de capteur.
